(19) Europäisches Patentamt
European Patent Office
Office européen des brevets

(11) EP 3 184 497 A1

(12) **EUROPEAN PATENT APPLICATION**

(43) Date of publication:
**28.06.2017 Bulletin 2017/26**

(21) Application number: **15202578.9**

(22) Date of filing: **23.12.2015**

(51) Int Cl.:
***C03C 25/24*** *(2006.01)* ***C03C 25/32*** *(2006.01)*
***D04H 1/64*** *(2012.01)* ***D04H 1/4209*** *(2012.01)*
***C08G 16/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Rockwool International A/S**
**2640 Hedehusene (DK)**

(72) Inventor: **HJELMGAARD, Thomas**
**3480 Fredensborg (DK)**

(74) Representative: **Letzelter, Felix Phillip**
**Meissner Bolte Patentanwälte**
**Rechtsanwälte Partnerschaft mbB**
**Widenmayerstraße 47**
**80538 München (DE)**

# (54) BINDER COMPRISING A CYCLIC OXOCARBON

(57) Described is an aqueous binder composition for mineral fibers comprising
a component (i) in the form of a cyclic oxocarbon;
a component (ii) in the form of one or more compounds selected from the group of ammonia, amines or any salts thereof;
a component (iii) in the form of one or more carbohydrates.

EP 3 184 497 A1

## Description

### Field of the Invention

The present invention relates to an aqueous binder for mineral fibre products, a method of producing a bonded mineral fibre product using said binder, and a mineral fibre product comprising mineral fibres in contact with a cured binder.

### Background of the Invention

Mineral fibre products generally comprise man-made vitreous fibres (MMVF) such as, e.g., glass fibres, ceramic fibres, basalt fibres, slag wool, mineral wool and stone wool (rock wool), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

In the meantime, a number of binders for mineral fibres have been provided, which are to a large extent based on renewable starting materials. Typical components of these binders are carbohydrate components, in particular sugar components.

However, while for some of these binder compositions based on carbohydrate components, good mechanical properties of the mineral fibre product comprising the cured binders could be achieved, relatively high curing onset and/or endset temperatures can still be a problem. High curing onset and endset temperatures lead to an increased energy demand and can also increase the wear of the machinery involved.

Another issue with some of the carbohydrate-based binder compositions is the relatively high reaction loss which leads to increased amounts of binder which have to be used for preparing the mineral wool products.

A further issue with existing carbohydrate-based binder compositions is that a relatively high amount of the non-carbohydrate components is needed for achieving good mechanical properties of the mineral fibre product. This relatively high amount of the non-carbohydrate component needed in these existing binders leads to increased costs and can also lessen the character of these binders as ecological binders.

### Summary of the Invention

Accordingly, it was an object of the present invention to provide an aqueous binder composition which is particularly suitable for bonding mineral fibres, is economically produced and is using to a large extent renewable materials as starting products for the preparation of the aqueous binder composition. In particular, it was an object of the present invention to provide aqueous binder compositions which are using a large extent of renewable materials and have a good balance of high binder strength, low curing temperatures and low reaction loss.

A further object of the present invention was to provide a mineral fibre product bonded with such a binder composition.

In accordance with a first aspect of the present invention, there is provided an aqueous binder composition for mineral fibers comprising

a component (i) in the form of a cyclic oxocarbon;

a component (ii) in the form of one or more compounds selected from the group of ammonia, amines or any salts thereof;

a component (iii) in the form of one or more carbohydrates.

In accordance with a second aspect of the present invention, there is provided a method of producing a bonded mineral fibre product which comprises the steps of contacting the mineral fibres with the binder composition and curing the binder composition.

In accordance with a third aspect of the present invention, there is provided a mineral fibre product comprising mineral fibres in contact with a cured binder composition defined above.

The present inventors have surprisingly found that it is possible to prepare a binder composition for mineral fibres that uses an increased extent of components which are renewable in form of a carbohydrate component and therefore achieves also economic advantages over the previously-known binders. This is because it has been surprisingly found that a very small amount of the cyclic oxocarbon component is sufficient to provide a carbohydrate based binder with very advantageous properties. Accordingly, the binders according to the present invention are both economically and ecologically advantageous. The combination of these two aspects is particularly remarkable, since "bio-materials" are often more expensive than conventional materials. At the same time, the binders according to the present invention have an advantageous balance of high binder strength, low curing temperature and low reaction loss. Accordingly, in the binders according to the present invention, even a small amount of the components other than the carbohydrate component allows a good balance of properties.

Additionally, the aqueous binder compositions according to the present invention are very stable and therefore have a long shelf life of the ready-to-use aqueous binder composition.

Further, the binders according to one embodiment of the present invention are not strongly acidic and therefore overcome corrosion problems associated with strongly acidic binders known from the prior art.

**Description of the Preferred Embodiments**

The aqueous binder composition according to the present invention comprises:

a component (i) in the form of a cyclic oxocarbon;

a component (ii) in the form of one or more compounds selected from the group of ammonia, amines or any salts thereof;

a component (iii) in the form of one or more carbohydrates.

Cyclic oxocarbons are known to the person skilled in the art. In connection with the term "oxocarbon", reference is made to *"*Oxocarbons, West, R., Ed.; Academic Press, Inc., New York, 1980*)"*: a "compound in which all or nearly all of the carbon atoms are bonded to carbonyl or enolic oxygens or their hydrated or deprotonated equivalents".

In the framework of the present invention, the term "cyclic oxocarbon" shall be understood to be a cyclic molecule in which *all* of the carbon atoms are bonded to carbonyl or enolic oxygens or their hydrated or deprotonated equivalents.

Preferably, the binders according to the present invention have a pH of 6-9.

Preferably, the binders according to the present invention are formaldehyde free.

For the purpose of the present application, the term "formaldehyde free" is defined to characterise a mineral wool product where the emission is below 5 $\mu g/m^2/h$ of formaldehyde from the mineral wool product, preferably below 3 $\mu g/m^2/h$. Preferably, the test is carried out in accordance with ISO 16000 for testing aldehyde emissions.

<u>Component (i) of the Binder</u>

Preferably, component (i) is in the form of a non-heterocyclic cyclic oxocarbon.

In the framework of the present invention, the term "non-heterocyclic cyclic oxocarbon" shall be understood to be a cyclic oxocarbon, wherein the ring system consists only of carbon atoms.

In a further preferred embodiment, the component (i) is selected from the group of squaric acid, croconic acid, rhodizonic acid, deltic acid, and/or any salt of the compounds, preferably ammonium salts and/or amine salts and/or calcium, sodium, potassium, magnesium or iron salts, and any combinations thereof.

The structures of deltic acid, squaric acid, croconic acid, and rhodizonic acid are shown below:

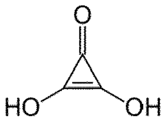 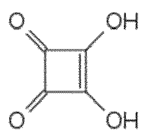 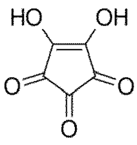 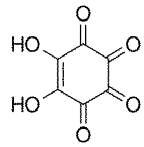

Both protons in these molecules are acidic: Deltic acid: $pK_{a,1}$ = 2.6 and $pK_{a,2}$ = 6.0; Squaric acid: $pK_{a,1}$ = 1.5 and $pK_{a,2}$ = 3.4; Croconic acid: $pK_{a,1}$ = 0.8 and $pK_{a,2}$ = 2.2; Rhodizonic acid: $pK_{a,1}$ = 4.4 and $pK_{a,2}$ = 4.7.

At the preferred pH ranges of the binders according to the present invention, the non-heterocyclic cyclic oxocarbons will be on dianion form. The dianions of deltic acid, squaric acid, croconic acid and rhodizonic acid all have the formula $(CO)_n^{2-}$. These dianions are symmetric, as the double bond and the negative charges are delocalized and evenly distributed over the 3-6 CO units. This is illustrated below for squaric acid:

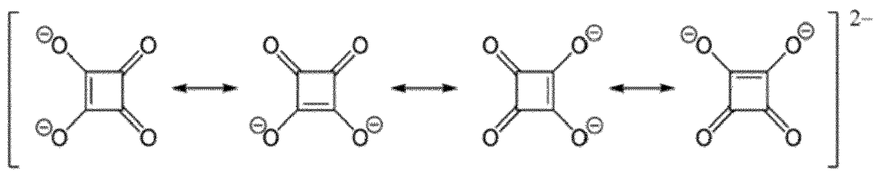

The dianions possess a high degree of aromatic character and are characterized by a comparatively high stability. While we are not bound by any theory, we thus believe that the non-heterocyclic cyclic oxocarbons cannot participate in Maillard reactions as a reductone.

In a particularly preferred embodiment, the component (i) is squaric acid, and/or croconic acid, and/or any salt of squaric acid and/or croconic acid, preferably ammonium salts and/or amine salts and/or calcium, sodium, potassium, magnesium or iron salts, and any combinations thereof.

Component (ii) of the Binder

Component (ii) is selected from ammonia, amines or any salts thereof.

In a preferred embodiment, component (ii) is ammonia.

In a further preferred embodiment, component (ii) is in form of one or more amines, such as piperazine, polyamine such as hexamethylenediamine, m-xylylenediamine, diethylenetriamine, triethylenetetramine, tetraethylenepentamine, monoethanolamine, diethanolamine, triethanolamine and salts thereof.

Component (iii) of the Binder

Component (iii) is in form of one or more carbohydrates.

Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number. DE is an abbreviation for Dextrose Equivalent and is defined as the content of reducing sugars, determined by the method specified in International Standard ISO 5377-1981 (E).

This method measures reducing end groups and attaches a DE of 100 to pure dextrose and a DE of 0 to pure starch.

In a preferred embodiment, the carbohydrate is selected from sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 5 to less than 100, such as DE = 60 to less than 100, such as DE = 60-99, such as DE = 85-99, such as DE = 95-99.

In a further preferred embodiment, the carbohydrate is dextrose and/or one or more carbohydrate component having a DE value of ≥ 60, in particular 60 to 100, more particular 85 to 100.

The term "dextrose" as used in this application is defined to encompass glucose and the hydrates thereof.

In a further preferred embodiment, the carbohydrate is selected from hexoses, in particular allose, altrose, glucose, mannose, gulose, idose, galactose, talose, psicose, fructose, sorbose and/or tagatose; and/or pentoses, in particular arabinose, lyxose, ribose, xylose, ribulose and/or xylulose; and/or tetroses, in particular erythrose, threose, and/or erythrulose.

In a further preferred embodiment, the carbohydrate is one or more carbohydrate components selected from the group consisting of hexose, such as dextrose, fructose, pentose such as xylose, and/or sucrose, glucose syrup, dextrin or maltodextrin.

Since the carbohydrates of component (iii) are comparatively inexpensive compounds and are produced from renewable resources, the inclusion of high amounts of component (iii) in the binder according to the present invention allows the production of a binder for mineral wool which is advantageous under economic aspects and at the same time allows the production of an ecological non-toxic binder.

Weight Ratios of the Components of the Aqueous Binder Composition

In a preferred embodiment, the proportion of components (i), (ii) and (iii) is within the range of 0.2 to 25, in particular 0.2 to 10 weight-% component (i) based on the mass of components (i) and (iii), 75 to 99.8, in particular 90 to 99.8 weight-% component (iii) based on the mass of components (i) and (iii), and 0.1 to 10, in particular 0.1 to 5 molar equivalents of component (ii) relative to component (i).

Component (iv) of the Binder

In a preferred embodiment the aqueous binder composition further comprises a component (iv) in form of a carboxylic acid, or any salt thereof, such as ammonium salts, such as a monomeric mono-, di-, tri-, and polycarboxylic acid, preferably citric acid, such as ammonium salts of citric acid.
In a preferred embodiment, the component (iv) is selected from monomeric polycarboxylic acids, polymeric polycarboxylic acids, monomeric monocarboxylic acids, and/or polymeric monocarboxylic acid, such as polyacrylic acid.
In a particular preferred embodiment, component (iv) is citric acid.
The citric acid may advantageously be added as ammonium salt of citric acid, such as triammonium citrate.

Component (v) of the Binder

In a preferred embodiment, the binder composition according to the present invention further comprises a component (v) in form of

- compounds of the formula, and any salts thereof:

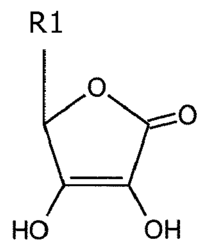

in which R1 corresponds to H, alkyl, monohydroxyalkyl, dihydroxyalkyl, polyhydroxyalkyl, alkylene, alkoxy, amine;

- compounds of the formula, and any salts thereof:

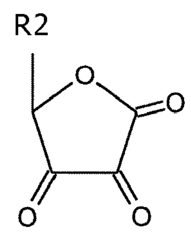

in which R2 corresponds to H, alkyl, monohydroxyalkyl, dihydroxyalkyl, polyhydroxyalkyl, alkylene, alkoxy, amine.
Preferably, alkyl is $C_1$-$C_{10}$ alkyl.
Preferably, monohydroxyalkyl is monohydroxy $C_1$-$C_{10}$ alkyl.
Preferably, dihydroxyalkyl is dihydroxy $C_1$-$C_{10}$ alkyl.
Preferably, polyhydroxyalkyl is polyhydroxy $C_1$-$C_{10}$ alkyl.
Preferably, alkylene is alkylene $C_1$-$C_{10}$ alkyl.
Preferably, alkoxy is alkoxy $C_1$-$C_{10}$ alkyl.

In a particularly preferred embodiment, component (v) is selected from the group of L-ascorbic acid, D-isoascorbic acid, 5,6-isopropylidene ascorbic acid, dehydro-ascorbic acid and/or any salt of the compounds, preferably ammonium salts and/or amine salts and/or calcium, potassium, magnesium or iron salts.

In a particularly preferred embodiment, component (v) is L-ascorbic acid, preferably in form of ammonium salts and/or amine salts.

Ascorbic acid, or vitamin C, is a non-toxic, naturally occurring organic compound with antioxidant properties, which can be produced from biomass. Ascorbic acid and its derivatives are therefore a product which is produced from renewable resources and can at the same time be obtained at a comparatively low price.

A preferred binder composition including component (v) comprises component (v) in form of ascorbic acid and/or any salt thereof, preferably in an amount of 1 to 50 weight-%, preferably 1 to 25 weight-%, more preferably 1 to 15 weight-%, based on the mass of compounds (i) and (iii).

In a preferred binder composition including component (v), component (ii) is preferably present in an amount of 0.1 to 10 molar equivalents of component (ii) relative to the combined molar equivalents of components (i) and (v).

Component (vi) of the Binder

In a preferred embodiment, the binder composition according to the present invention further comprises a component (vi) selected from sulfuric acid, sulfamic acid, nitric acid, boric acid, hypophosphorous acid, and/or phosphoric acid, and/or salts thereof such as sodium hypophosphite, and/or ammonium salts, such as ammonium salts of sulfuric acid, sulfamic acid, nitric acid, boric acid, hypophosphorous acid, and/or phosphoric acid.

In a particular preferred embodiment, the component (vi) is selected from sulfamic acid and/or hypophosphorous acid and/or ammonium salts of sulfamic acid and/or hypophosphorous acid.

A preferred binder composition including component (vi) comprises component (vi) preferably in an amount of 1 to 10 weight-%, preferably 1 to 5 weight-%, more preferably 1 to 2 weight-%, based on the mass of components (i) and (iii).

Component (vii) of the Binder

In a further embodiment, the binder composition according to the present invention a component (vii) in form of urea, preferably in an amount of 0 to 20 weight-%, preferably 0 to 10 weight-%, more preferably 0 to 5 weight-% urea, based on the mass of components (i), and (iii).

The inclusion of urea in the binder according to aspects of the present invention improves the fire resistance properties.

Further components

In a preferred embodiment, other components such as one or more reactive or nonreactive silicones may be added to the binder composition of the present invention. Preferably, the one or more reactive or nonreactive silicone is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1-15 weight-%, preferably from 0.1-10 weight-%, more preferably 0.3-8 weight-%, based on the total binder mass.

In one embodiment, a silane may be added to the binder composition of the present invention.

Optionally, an emulsified hydrocarbon oil may be added to the binder composition according to the present invention.

Method According to the Present Invention

The present invention is also directed to a method of producing a bonded mineral fibre product which comprises the steps of contacting the mineral fibre with the binder composition as described above, and curing the binder composition.

The present invention is also directed to a mineral fibre product prepared by this method.

Mineral Fibre Product According to the Present Invention

The present invention is also directed to a mineral fibre product comprising mineral fibres in contact with a cured binder composition as described above, i.e. in contact with a cured binder resulting from the curing of the aqueous binder composition described above.

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the air-borne mineral fibres. The aqueous binder composition is normally applied in an amount of 0.1 to 18%, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 6 to 250 kg/$m^3$, preferably 20 to 200 kg/$m^3$. The mineral fibre products generally have a loss on ignition (LOI) within the range of 0.3 to 18.0 %, preferably 0.5 to 8.0 %.

Although the aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the invention without limiting its scope.

## Examples

In the following examples, several binders which fall under the definition of the present invention were prepared and compared to binders according to the prior art.

The following properties were determined for the binders according to the present invention and the binders according to the prior art, respectively:

*Binder component solids content*

The content of each of the components in a given binder solution before curing is based on the anhydrous mass of the components.

50% aq. hypophosphorous acid, 28% aq. ammonia, and rhodizonic acid monohydrate were supplied by Sigma Aldrich. D-(+)-glucose monohydrate was supplied by Merck. 75.1 % aq. glucose syrup with a DE-value of 95 to less than 100 (C*sweet D 02767 ex Cargill) was supplied by Cargill. Silane (Momentive VS-142) was supplied by Momentive and was calculated as 100% for simplicity. All other components were supplied in high purity by Sigma-Aldrich and were assumed anhydrous for simplicity.

*Binder solids*

The content of binder after curing is termed "binder solids".

Disc-shaped stone wool samples (diameter: 5 cm; height 1 cm) were cut out of stone wool and heat-treated at 580 °C for at least 30 minutes to remove all organics. The solids of the binder mixture were measured by distributing a sample of the binder mixture (approx. 2 g) onto a heat treated stone wool disc in a tin foil container. The weight of the tin foil container containing the stone wool disc was weighed before and directly after addition of the binder mixture. Two such binder mixture loaded stone wool discs in tin foil containers were produced and they were then heated at 200 °C for 1 hour. After cooling and storing at room temperature for 10 minutes, the samples were weighed and the binder solids was calculated as an average of the two results.

A binder with the desired binder solids could then be produced by diluting with the required amount of water and 10% aq. silane (Momentive VS-142).

*Reaction loss*

The reaction loss is defined as the difference between the binder component solids content and the binder solids.

*Curing characteristics - DMA (dynamic mechanical analysis) measurements*

A 15% binder solids binder solution was obtained as described above. Cut and weighed glass Whatman™ glass microfiber filters (GF/B, 150 mm Ø, cat. no. 1821 150) (2.5x1 cm) were submerged into the 15% binder solution for 10 seconds. The resulting binder-soaked filter was then dried in a "sandwich" consisting of (1) a 0.60 kg 8×8×1 cm metal plate, (2) four layers of standard filter papers, (3) the binder soaked glass microfiber filter, (4) four layers of standard filter papers, and (5) a 0.60 kg 8×8×1 cm metal plate for approximately 2x2 minutes by applying a weight of 3.21 kg on top of the "sandwich". In a typical experiment, the cut Whatman™ glass microfiber filter would weigh 0.035 g before application of the binder and 0.125 g after application and drying which corresponds to a binder solution loading of 72%. All DMA measurements were performed with 72±1% binder solution loadings.

The DMA measurements were acquired on a Mettler Toledo DMA 1 calibrated against a certified thermometer at ambient temperature and the melting points of certified indium and tin. The apparatus was operated in single cantilever bending mode; titanium clamps; clamp distance 1.0 cm; temperature segment type; temperature range 40-280 °C; heating rate 3 °C / min; displacement 20 μm; frequency 1 Hz; single frequency oscillation mode. Curing onset and endset were evaluated using STARe software Version 12.00.

*Mechanical strength studies*

The mechanical strength of the binders was tested in a tablet test. For each binder, six tablets were manufactured from a mixture of the binder and stone wool shots from the stone wool spinning production. The shots are particles which have the same melt composition as the stone wool fibers, and the shots are normally considered a waste product from the spinning process. The shots used for the tablet composition have a size of 0.25-0.50 mm.

A 15% binder solids binder solution containing 0.5% silane (Momentive VS-142) of binder solids was obtained as described above. A sample of this binder solution (4.0 g) was mixed well with shots (20.0 g). The resulting mixture was then transferred into a round aluminum foil container (bottom Ø = 4.5 cm, top Ø = 7.5 cm, height = 1.5 cm). The mixture was then pressed hard with a suitably sized flat bottom glass or plastic beaker to generate an even tablet surface. Six tablets from each binder were made in this fashion. The resulting tablets were then cured at 250 °C for 1 h. After cooling to room temperature, the tablets were carefully taken out of the containers. Three of the tablets were aged in a water bath at 80 °C for 3 h.

After drying for 1-2 days, all tablets were then broken in a 3 point bending test (test speed: 10.0 mm/min; rupture level: 50%; nominal strength: 30N/mm$^2$; support distance: 40 mm; max deflection 20 mm; nominal e-module 10000 N/mm$^2$) on a Bent Tram machine to investigate their mechanical strengths. The tablets were placed with the "bottom face" up (i.e. the face with Ø = 4.5 cm) in the machine.

<u>Reference binders from the prior art prepared as comparative examples</u>

**Binder example, reference binder A**

A mixture of anhydrous citric acid (10.2 g, 53.1 mmol) and D-(+)-glucose monohydrate (57.3 g; thus efficiently 52.1 g dextrose) in water (157.5 g) was stirred at room temperature until a clear solution was obtained. 28% aq. ammonia (7.80 g; thus efficiently 2.16 g, 128.4 mmol ammonia) was then added dropwise. The binder solids were then measured (17.4%).

For DMA and mechanical strength studies (15% binder solids solution, 0.5% silane of binder solids), the binder mixture was diluted with water (0.149 g / g binder mixture) and 10% aq. silane (0.009 g / g binder mixture, Momentive VS-142). The final binder mixture for mechanical strength studies had pH = 5.1.

**Binder example, reference binder B**

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of

approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) with 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken.

The acid tolerance (AT) is calculated by dividing the amount of acid used for the titration (mL) with the amount of sample (mL):

$$AT = (\text{Used titration volume (mL)}) / (\text{Sample volume (mL)})$$

Using the urea-modified phenol-formaldehyde resin obtained, a binder is made by addition of 25% aq. ammonia (90 mL) and ammonium sulfate (13.2 g) followed by water (1.30 kg).

The binder solids were then measured as described above and the mixture was diluted with the required amount of water and silane (Momentive VS-142) for mechanical and DMA measurements (15% binder solids solution, 0.5% silane of binder solids).

**Binder example, reference binder C**

A mixture of L-ascorbic acid (1.50 g, 8.52 mmol) and 75.1% aq. glucose syrup (18.0 g; thus efficiently 13.5 g glucose syrup) in water (30.5 g) was stirred at room temperature until a clear solution was obtained. 50% aq. hypophosphorous acid (0.60 g; thus efficiently 0.30 g, 4.55 mmol hypophosphorous acid) and urea (0.75 g) were then added. 28% aq. ammonia (0.99 g; thus efficiently 0.28 g, 16.3 mmol ammonia) was then added dropwise until pH = 6.9. The binder solids were then measured (21.5%).

For DMA and mechanical strength studies (15% binder solids solution, 0.5% silane of binder solids), the binder mixture was diluted with water (0.423 g / g binder mixture) and 10% aq. silane (0.011 g / g binder mixture, Momentive VS-142). The final binder mixture for mechanical strength studies had pH = 7.0.

**Binder example, reference binder D**

A mixture of 75.1% aq. glucose syrup (60.0 g; thus efficiently 45.0 g glucose syrup), ammonium sulfamate (2.25 g, 19.7 mmol) and urea (2.25 g) in water (105.1 g) was stirred at room temperature until a clear solution was obtained. 28% aq. ammonia (0.12 g; thus efficiently 0.03 g, 1.97 mmol ammonia) was then added dropwise until pH = 8.2. The binder solids were then measured (21.6%).

For DMA and mechanical strength studies (15% binder solids solution, 0.5% silane of binder solids), the binder mixture was diluted with water (0.432 g / g binder mixture) and 10% aq. silane (0.011 g / g binder mixture, Momentive VS-142). The final binder mixture for mechanical strength studies had pH = 8.2.

**Binder example, reference binder E**

This binder is based on alkanolamine-polycarboxylic acid anhydride reaction products.

Diethanolamine (DEA, 231.4 g) is placed in a 5-litre glass reactor provided with a stirrer and a heating/cooling jacket. The temperature of the diethanolamine is raised to 60 °C where after tetrahydrophthalic anhydride (THPA, 128.9 g) is added. After raising the temperature and keeping it at 130 °C, a second portion of tetrahydrophthalic anhydride (64.5 g) is added followed by trimellitic anhydride (TMA, 128.9 g). After reacting at 130 °C for 1 hour, the mixture is cooled to 95 °C. Water (190.8 g) is added and stirring is continued for 1 hour. After cooling to ambient temperature, the mixture is poured into water (3.40 kg) and 50% aq. hypophosphorous acid (9.6 g) and 25% aq. ammonia (107.9 g) are added under stirring. Glucose syrup (1.11 kg) is heated to 60 °C and then added under stirring followed by 50% aq. silane (5.0 g, Momentive VS-142).

The binder solids were then measured as described above and the mixture was diluted with the required amount of water for DMA and mechanical strength measurements (15% binder solids solutions).

**Binder example, reference binder F**

This binder is based on alkanolamine-polycarboxylic acid anhydride reaction products.

Diethanolamine (DEA, 120.5 g) is placed in a 5-litre glass reactor provided with a stirrer and a heating/cooling jacket. The temperature of the diethanolamine is raised to 60 °C where after tetrahydrophthalic anhydride (THPA, 67.1 g) is added. After raising the temperature and keeping it at 130 °C, a second portion of tetrahydrophthalic anhydride (33.6 g) is added followed by trimellitic anhydride (TMA, 67.1 g). After reacting at 130 °C for 1 hour, the mixture is cooled to 95 °C. Water (241.7 g) is added and stirring is continued for 1 hour. Urea (216.1 g) is then added and stirring is continued until all solids are dissolved. After cooling to ambient temperature, the mixture is poured into water (3.32 kg) and 50% aq. hypophosphorous acid (5.0 g) and 25% aq. ammonia (56.3 g) are added under stirring.

Glucose syrup (1.24 kg) is heated to 60 °C and then added under stirring followed by 50% aq. silane (5.0 g, Momentive VS-142).

The binder solids were then measured as described above and the mixture was diluted with the required amount of water for DMA and mechanical strength measurements (15% binder solids solutions).

<u>Binder compositions according to the present invention</u>

In the following, the entry numbers of the binder example correspond to the entry numbers used in Table 1.

*Binder example, entry 3*

To a stirred solution of 75.1% aq. glucose syrup (19.0 g; thus efficiently 14.3 g glucose syrup) in water (30.3 g) at room temperature was added squaric acid (0.75 g, 6.58 mmol). 28% aq. ammonia (1.05 g; thus efficiently 0.29 g, 17.3 mmol ammonia) was then added dropwise and stirring was continued until a clear solution was obtained. The binder solids were then measured (19.8%).

For DMA and mechanical strength studies (15% binder solids solution, 0.5% silane of binder solids), the binder mixture was diluted with water (0.311 g / g binder mixture) and 10% aq. silane (0.010 g / g binder mixture). The final binder mixture had pH = 7.8.

*Binder example, entry 15*

To a stirred solution of 75.1% aq. glucose syrup (19.6 g; thus efficiently 14.7 g glucose syrup) in water (30.1 g) at room temperature was added squaric acid (0.30 g, 2.63 mmol) and sulfamic acid (0.30 g, 3.09 mmol). 28% aq. ammonia (0.69 g; thus efficiently 0.19 g, 11.3 mmol ammonia) was then added dropwise and stirring was continued until a clear solution was obtained. The binder solids were then measured (21.4%).

For DMA and mechanical strength studies (15% binder solids solution, 0.5% silane of binder solids), the binder mixture was diluted with water (0.413 g / g binder mixture) and 10% aq. silane (0.011 g / g binder mixture). The final binder mixture had pH = 7.9.

*Binder example, entry 16*

To a stirred solution of 75.1% aq. glucose syrup (19.6 g; thus efficiently 14.7 g glucose syrup) in water (30.1 g) at room temperature was added squaric acid (0.30 g, 2.63 mmol) and 50% hypophosphorous acid (0.60 g; thus efficiently 0.30 g, 4.55 mmol hypophosphorous acid). 28% aq. ammonia (0.82 g; thus efficiently 0.23 g, 13.5 mmol ammonia) was then added dropwise and stirring was continued until a clear solution was obtained. The binder solids were then measured (20.6%).

For DMA and mechanical strength studies (15% binder solids solution, 0.5% silane of binder solids), the binder mixture was diluted with water (0.362 g / g binder mixture) and 10% aq. silane (0.010 g / g binder mixture). The final binder mixture had pH = 7.5.

*Binder example, entry 30*

To a stirred solution of 75.1% aq. glucose syrup (19.6 g; thus efficiently 14.7 g glucose syrup) in water (30.1 g) at room temperature was added squaric acid (0.30 g, 2.63 mmol) and 50% hypophosphorous acid (0.60 g; thus efficiently 0.30 g, 4.55 mmol hypophosphorous acid). Hexamethylenediamine (0.68 g, 5.85 mmol) was then added and stirring was continued until a clear solution was obtained. The binder solids were then measured (21.1%).

For DMA and mechanical strength studies (15% binder solids solution, 0.5% silane of binder solids), the binder mixture was diluted with water (0.395 g / g binder mixture) and 10% aq. silane (0.011 g / g binder mixture). The final

binder mixture had pH = 8.5.

*Binder example, entry 33*

To a stirred solution of 75.1% aq. glucose syrup (19.6 g; thus efficiently 14.7 g glucose syrup) in water (30.1 g) at room temperature was added squaric acid (0.30 g, 2.63 mmol), urea (0.75 g), and 50% hypophosphorous acid (0.60 g; thus efficiently 0.30 g, 4.55 mmol hypophosphorous acid). 28% aq. ammonia (0.82 g; thus efficiently 0.23 g, 13.5 mmol ammonia) was then added dropwise and stirring was continued until a clear solution was obtained. The binder solids were then measured (21.6%).

For DMA and mechanical strength studies (15% binder solids solution, 0.5% silane of binder solids), the binder mixture was diluted with water (0.432 g / g binder mixture) and 10% aq. silane (0.011 g / g binder mixture). The final binder mixture had pH = 7.4.

*Binder example, entry 37*

To a stirred solution of 75.1% aq. glucose syrup (19.6 g; thus efficiently 14.7 g glucose syrup) in water (30.1 g) at room temperature was added squaric acid (0.30 g, 2.63 mmol), L-ascorbic acid (0.75 g, 4.26 mmol), and 50% hypophosphorous acid (0.60 g; thus efficiently 0.30 g, 4.55 mmol hypophosphorous acid). 28% aq. ammonia (1.09 g; thus efficiently 0.31 g, 17.9 mmol ammonia) was then added dropwise and stirring was continued until a clear solution was obtained. The binder solids were then measured (21.0%).

For DMA and mechanical strength studies (15% binder solids solution, 0.5% silane of binder solids), the binder mixture was diluted with water (0.392 g / g binder mixture) and 10% aq. silane (0.011 g / g binder mixture). The final binder mixture had pH = 7.2.

*Binder example, entry 39*

To a stirred solution of 75.1% aq. glucose syrup (19.6 g; thus efficiently 14.7 g glucose syrup) in water (30.1 g) at room temperature was added squaric acid (0.30 g, 2.63 mmol) and L-ascorbic acid (1.50 g, 8.52 mmol). 28% aq. ammonia (1.03 g; thus efficiently 0.29 g, 16.9 mmol ammonia) was then added dropwise and stirring was continued until a clear solution was obtained. The binder solids were then measured (20.8%).

For DMA and mechanical strength studies (15% binder solids solution, 0.5% silane of binder solids), the binder mixture was diluted with water (0.374 g / g binder mixture) and 10% aq. silane (0.010 g / g binder mixture). The final binder mixture had pH = 7.0.

*Binder example, entry 41*

To a stirred solution of 75.1% aq. glucose syrup (19.6 g; thus efficiently 14.7 g glucose syrup) in water (30.1 g) at room temperature was added croconic acid (0.30 g, 2.11 mmol) and 50% hypophosphorous acid (0.60 g; thus efficiently 0.30 g, 4.55 mmol hypophosphorous acid). 28% aq. ammonia (0.78 g; thus efficiently 0.22 g, 12.8 mmol ammonia) was then added dropwise and stirring was continued until a clear solution was obtained. The binder solids were then measured (21.7%).

For DMA and mechanical strength studies (15% binder solids solution, 0.5% silane of binder solids), the binder mixture was diluted with water (0.438 g / g binder mixture) and 10% aq. silane (0.011 g / g binder mixture). The final binder mixture had pH = 8.6.

The other binders mentioned in Table 1 were prepared in a manner analogous to the preparation described above.

TABLE 1-1

| | Reference binders | | | | | |
|---|---|---|---|---|---|---|
| **Example** | A | B | C | D | E | F |
| **Binder composition** | | | | | | |
| | | | | | | |
| Cyclic oxocarbon (%-wt.) | | | | | | |
| Squaric acid | - | - | - | - | - | - |

(continued)

| | Reference binders | | | | | |
|---|---|---|---|---|---|---|
| **Example** | A | B | C | D | E | F |
| Croconic acid | - | - | - | - | - | - |
| Rhodizonic acid | - | - | - | - | - | - |
| | | | | | | |
| Acid or Ascorb. acid (%-wt.) | | | | | | |
| L-Ascorbic acid | - | - | 10 | - | - | - |
| Hypophosphorous acid | - | - | - | - | - | - |
| | | | | | | |
| Carbohydrate (%-wt.) | | | | | | |
| Glucose syrup | - | - | 90 | 100 | - | - |
| Xylose | - | - | - | - | - | - |
| Sucrose | - | - | - | - | - | - |
| | | | | | | |
| Additive (%-wt.)[a] | | | | | | |
| Hypophosphorous acid | - | - | 2 | - | - | - |
| Ammonium sulfamate | - | - | - | 5 | - | - |
| Sulfamic acid | - | - | - | - | - | - |
| Sulfuric acid | - | - | - | - | - | - |
| Phosphoric acid | - | - | - | - | - | - |
| Urea | - | - | 5 | 5 | - | - |
| L-Ascorbic acid | - | - | - | - | - | - |
| Citric acid | - | - | - | - | - | - |
| | | | | | | |
| Amine (equiv.) [b] | | | | | | |
| Ammonia (added) | - | - | 1.2 | 0.1 | - | - |
| Hexamethylenediamine | - | - | - | - | - | - |
| Diethanolamine | - | - | - | - | - | - |
| | | | | | | |
| Silane (% of binder solids) | 0.5 | 0.5 | 0.5 | 0.5 | - | - |
| | | | | | | |
| **Binder properties** | | | | | | |
| Curing onset (°C) | 144 | 159 | 170 | 170 | 178 | 196 |
| Curing endset (°C) | 165 | 172 | 191 | 191 | 210 | 220 |
| Reaction loss (%) | 37.3 | 28.5 | 31.1 | 25.9 | 28.9 | 30.6 |
| pH of 15% soln. | 5.1 | 9.6 | 7.0 | 8.2 | 6.1 | 6.2 |
| Mechanical strength, unaged (kN) | 0.17 | 0.16 | 0.16 | 0.16 | 0.20 | 0.09 |

(continued)

| Binder properties | | | | | | |
|---|---|---|---|---|---|---|
| Mechanical strength, aged (kN) | 0.13 | 0.09 | 0.08 | 0.09 | 0.16 | 0.07 |
| [a] Of Carbohydrate + Cyclic oxocarbon or Acid or ascorbic acid. [b] Molar amine equivalents relative to molar mineral or organic acid equivalents. | | | | | | |

TABLE 1-2

| | Squaric acid, glucose syrup, ammonia | | | | | Ascorbic acid, glucose syrup, ammonia | | | | Hypophosphorous acid, glucose syrup, ammonia | | | |
|---|---|---|---|---|---|---|---|---|---|---|---|---|---|
| **Example** | 1 | 2 | 3 | 4 | 5 | 6 | 7 | 8 | 9 | 10 | 11 | 12 | 13 |
| **Binder composition** | | | | | | | | | | | | | |
| | | | | | | | | | | | | | |
| Cyclic oxocarbon (%-wt.) | | | | | | | | | | | | | |
| Squaric acid | 20 | 10 | 5 | 2 | - | - | - | - | - | - | - | - | - |
| Croconic acid | - | - | - | - | - | - | - | - | - | - | - | - | - |
| Rhodizonic acid | - | - | - | - | - | - | - | - | - | - | - | - | - |
| | | | | | | | | | | | | | |
| Acid or Ascorb. acid (%-wt.) | | | | | | | | | | | | | |
| L-Ascorbic acid | - | - | - | - | - | 20 | 10 | 5 | 2 | - | - | - | - |
| Hypophosphorous acid | - | - | - | - | - | - | - | - | - | 20 | 10 | 5 | 2 |
| | | | | | | | | | | | | | |
| Carbohydrate (%-wt.) | | | | | | | | | | | | | |
| Glucose syrup | 80 | 90 | 95 | 98 | 100 | 80 | 90 | 95 | 98 | 80 | 90 | 95 | 98 |
| Xylose | - | - | - | - | - | - | - | - | - | - | - | - | - |
| Sucrose | - | - | - | - | - | - | - | - | - | - | - | - | - |
| | | | | | | | | | | | | | |
| Additive (%-wt.)[a] | | | | | | | | | | | | | |
| Hypophosphorous acid | - | - | - | - | - | - | - | - | - | - | - | - | - |
| Ammonium sulfamate | - | - | - | - | - | - | - | - | - | - | - | - | - |
| Sulfamic acid | - | - | - | - | - | - | - | - | - | - | - | - | - |
| Sulfuric acid | - | - | - | - | - | - | - | - | - | - | - | - | - |
| Phosphoric acid | - | - | - | - | - | - | - | - | - | - | - | - | - |
| Urea | - | - | - | - | - | - | - | - | - | - | - | - | - |
| L-Ascorbic acid | - | - | - | - | - | - | - | - | - | - | - | - | - |

(continued)

| | Squaric acid, glucose syrup, ammonia | | | | | Ascorbic acid, glucose syrup, ammonia | | | | Hypophosphorous acid, glucose syrup, ammonia | | | |
|---|---|---|---|---|---|---|---|---|---|---|---|---|---|
| **Example** | 1 | 2 | 3 | 4 | 5 | 6 | 7 | 8 | 9 | 10 | 11 | 12 | 13 |
| **Binder composition** | | | | | | | | | | | | | |
| Citric acid | - | - | - | - | - | - | - | - | - | - | - | - | - |
| | | | | | | | | | | | | | |
| Amine (equiv.) [b] | | | | | | | | | | | | | |
| Ammonia (added) | 1.3 | 1.2 | 1.3 | 1.4 | - | 1.3 | 1.3 | 1.5 | 1.6 | 1.2 | 1.2 | 1.3 | 1.6 |
| Hexamethylenediamine | - | - | - | - | - | - | - | - | - | - | - | - | - |
| Diethanolamine | - | - | - | - | - | - | - | - | - | - | - | - | - |
| | | | | | | | | | | | | | |
| Silane (% of binder solids) | 0.5 | 0.5 | 0.5 | 0.5 | 0.5 | 0.5 | 0.5 | 0.5 | 0.5 | 0.5 | 0.5 | 0.5 | 0.5 |
| | | | | | | | | | | | | | |
| **Binder properties** | | | | | | | | | | | | | |
| Curing onset (°C) | 140 | 141 | 157 | 194 | 220 | 184 | 202 | 208 | 217 | 128 | 134 | 161 | 195 |
| Curing endset (°C) | 160 | 157 | 174 | 218 | 246 | 202 | 218 | 228 | 241 | 149 | 155 | 180 | 222 |
| Reaction loss (%) | 34.3 | 36.7 | 33.9 | 26.0 | 34.6 | 37.6 | 38.8 | 39.2 | 38.7 | 33.7 | 32.4 | 21.5 | 25.9 |
| pH of 15% soln. | 6.6 | 7.7 | 7.8 | 7.8 | 9.3 | 7.8 | 7.6 | 8.2 | 8.6 | 7.1 | 7.2 | 7.2 | 7.8 |
| Mechanical strength, unaged (kN) | 0.14 | 0.15 | 0.14 | 0.17 | 0.19 | 0.19 | 0.21 | 0.19 | 0.20 | 0.08 | 0.13 | 0.15 | 0.20 |
| Mechanical strength, aged (kN) | 0.11 | 0.10 | 0.11 | 0.07 | 0.13 | 0.14 | 0.18 | 0.13 | 0.10 | 0.01 | 0.05 | 0.10 | 0.10 |

[a] Of Carbohydrate + Cyclic oxocarbon or Acid or ascorbic acid. [b] Molar amine equivalents relative to molar mineral or organic acid equivalents.

TABLE 1-3

| | Squaric acid, glucose syrup, mineral acid, ammonia | | | | | | |
|---|---|---|---|---|---|---|---|
| **Example** | 4 | 14 | 15 | 16 | 17 | 18 | 19 |
| **Binder composition** | | | | | | | |
| | | | | | | | |
| Cyclic oxocarbon (%-wt.) | | | | | | | |
| Squaric acid | 2 | 2 | 2 | 2 | 2 | 2 | 2 |
| Croconic acid | - | - | - | - | - | - | - |
| Rhodizonic acid | - | - | - | - | - | - | - |
| | | | | | | | |
| Acid or Ascorb. acid (%-wt.) | | | | | | | |
| L-Ascorbic acid | - | - | - | - | - | - | - |
| Hypophosphorous acid | - | - | - | - | - | - | - |
| | | | | | | | |
| Carbohydrate (%-wt.) | | | | | | | |
| Glucose syrup | 98 | 98 | 98 | 98 | 98 | 98 | 98 |
| Xylose | - | - | - | - | - | - | - |
| Sucrose | - | - | - | - | - | - | - |
| | | | | | | | |
| Additive (%-wt.)[a] | | | | | | | |
| Hypophosphorous acid | - | - | - | 2 | - | - | 4 |
| mmonium sulfamate | - | - | - | - | - | - | - |
| Sulfamic acid | - | - | 2 | - | - | 4 | - |
| Sulfuric acid | - | 2 | - | - | - | - | - |
| Phosphoric acid | - | - | - | - | 2 | - | - |
| Urea | - | - | - | - | - | - | - |
| L-Ascorbic acid | - | - | - | - | - | - | - |
| Citric acid | - | - | - | - | - | - | - |
| | | | | | | | |
| Amine (equiv.) [b] | | | | | | | |
| Ammonia (added) | 1.4 | 1.3 | 1.4 | 1.4 | 1.8 | 1.4 | 1.4 |
| Hexamethylenediamine | - | - | - | - | - | - | - |
| Diethanolamine | - | - | - | - | - | - | - |
| | | | | | | | |
| Silane (% of binder solids) | 0.5 | 0.5 | 0.5 | 0.5 | 0.5 | 0.5 | 0.5 |
| | | | | | | | |
| **Binder properties** | | | | | | | |
| Curing onset (°C) | 194 | 159 | 167 | 167 | 168 | 156 | 154 |
| Curing endset (°C) | 218 | 177 | 186 | 190 | 188 | 173 | 174 |

(continued)

| Binder properties | | | | | | | |
|---|---|---|---|---|---|---|---|
| Reaction loss (%) | 26.0 | 30.8 | 29.7 | 31.8 | 33.2 | 32.7 | 31.6 |
| pH of 15% soln. | 7.8 | 8.2 | 7.9 | 7.5 | 7.4 | 8.2 | 7.9 |
| Mechanical strength, unaged (kN) | 0.17 | 0.13 | 0.17 | 0.15 | 0.13 | 0.15 | 0.20 |
| Mechanical strength, aged (kN) | 0.07 | 0.09 | 0.12 | 0.09 | 0.03 | 0.09 | 0.10 |
| [a] Of Carbohydrate + Cyclic oxocarbon or Acid or ascorbic acid. [b] Molar amine equivalents relative to molar mineral or organic acid equivalents. | | | | | | | |

TABLE 1-4

| | Squaric acid, glucose syrup, hypophosphorous acid, ammonia | | | | | | | | |
|---|---|---|---|---|---|---|---|---|---|
| **Example** | 20 | 21 | 22 | 16 | 23 | 24 | 19 | 25 | 26 |
| **Binder composition** | | | | | | | | | |
| | | | | | | | | | |
| Cyclic oxocarbon (%-wt.) | | | | | | | | | |
| Squaric acid | 10 | 5 | 3 | 2 | 1 | - | 2 | 1 | - |
| Croconic acid | - | - | - | - | - | - | - | - | - |
| Rhodizonic acid | - | - | - | - | - | - | - | - | - |
| | | | | | | | | | |
| Acid or Ascorb. acid (%-wt.) | | | | | | | | | |
| L-Ascorbic acid | - | - | - | - | - | - | - | - | - |
| Hypophosphorous acid | - | - | - | - | - | - | - | - | - |
| | | | | | | | | | |
| Carbohydrate (%-wt.) | | | | | | | | | |
| Glucose syrup | 90 | 95 | 97 | 98 | 99 | 100 | 98 | 99 | 100 |
| Xylose | - | - | - | - | - | - | - | - | - |
| Sucrose | - | - | - | - | - | - | - | - | - |
| | | | | | | | | | |
| Additive (%-wt.)[a] | | | | | | | | | |
| Hypophosphorous acid | 2 | 2 | 2 | 2 | 2 | 2 | 4 | 4 | 4 |
| Ammonium sulfamate | - | - | - | - | - | - | - | - | - |
| Sulfamic acid | - | - | - | - | - | - | - | - | - |
| Sulfuric acid | - | - | - | - | - | - | - | - | - |
| Phosphoric acid | - | - | - | - | - | - | - | - | - |
| Urea | - | - | - | - | - | - | - | - | - |
| L-Ascorbic acid | - | - | - | - | - | - | - | - | - |
| Citric acid | - | - | - | - | - | - | - | - | - |
| | | | | | | | | | |
| Amine (equiv.) [b] | | | | | | | | | |
| Ammonia (added) | 1.2 | 1.2 | 1.4 | 1.4 | 1.5 | 1.7 | 1.4 | 1.5 | 1.3 |

(continued)

| | Squaric acid, glucose syrup, hypophosphorous acid, ammonia | | | | | | | | |
|---|---|---|---|---|---|---|---|---|---|
| **Example** | 20 | 21 | 22 | 16 | 23 | 24 | 19 | 25 | 26 |
| **Binder composition** | | | | | | | | | |
| Hexamethylenediamine | - | - | - | - | - | - | - | - | - |
| Diethanolamine | - | - | - | - | - | - | - | - | - |
| | | | | | | | | | |
| Silane (% of binder solids) | 0.5 | 0.5 | 0.5 | 0.5 | 0.5 | 0.5 | 0.5 | 0.5 | 0.5 |
| | | | | | | | | | |
| **Binder properties** | | | | | | | | | |
| Curing onset (°C) | 138 | 149 | 159 | 167 | 179 | 196 | 154 | 160 | 169 |
| Curing endset (°C) | 156 | 166 | 178 | 190 | 202 | 220 | 174 | 181 | 189 |
| Reaction loss (%) | 35.2 | 35.1 | 32.4 | 31.8 | 28.5 | 25.2 | 31.6 | 31.4 | 30.3 |
| pH of 15% soln. | 7.3 | 7.9 | 8.1 | 7.5 | 7.9 | 8.1 | 7.9 | 8.4 | 7.9 |
| Mechanical strength, unaged (kN) | 0.15 | 0.16 | 0.18 | 0.15 | 0.19 | 0.18 | 0.20 | 0.17 | 0.16 |
| Mechanical strength, aged (kN) | 0.14 | 0.11 | 0.10 | 0.09 | 0.10 | 0.08 | 0.10 | 0.11 | 0.10 |

[a] Of Carbohydrate + Cyclic oxocarbon or Acid or ascorbic acid. [b] Molar amine equivalents relative to molar mineral or organic acid equivalents.

TABLE 1-5

| | Squaric acid, carbohydrate, mineral acid, ammonia | | | | | Squaric acid, glucose syrup, hypophosphorous acid, amine | | |
|---|---|---|---|---|---|---|---|---|
| **Example** | 15 | 16 | 27 | 28 | 29 | 16 | 30 | 31 |
| **Binder composition** | | | | | | | | |
| | | | | | | | | |
| Cyclic oxocarbon (%-wt.) | | | | | | | | |
| Squaric acid | 2 | 2 | 2 | 2 | 2 | 2 | 2 | 2 |
| Croconic acid | - | - | - | - | - | - | - | - |
| Rhodizonic acid | - | - | - | - | - | - | - | - |
| | | | | | | | | |
| Acid or Ascorb. acid (%-wt.) | | | | | | | | |
| L-Ascorbic acid | - | - | - | - | - | - | - | - |
| Hypophosphorous acid | - | - | - | - | - | - | - | - |
| | | | | | | | | |
| Carbohydrate (%-wt.) | | | | | | | | |
| Glucose syrup | 98 | 98 | - | - | - | 98 | 98 | 98 |
| Xylose | - | - | 98 | - | - | - | - | - |
| Sucrose | - | - | - | 98 | 98 | - | - | - |
| | | | | | | | | |
| Additive (%-wt.)[a] | | | | | | | | |

(continued)

| | Squaric acid, carbohydrate, mineral acid, ammonia | | | | | Squaric acid, glucose syrup, hypophosphorous acid, amine | | |
|---|---|---|---|---|---|---|---|---|
| **Example** | 15 | 16 | 27 | 28 | 29 | 16 | 30 | 31 |
| **Binder composition** | | | | | | | | |
| Hypophosphorous acid | - | 2 | 2 | - | 2 | 2 | 2 | 2 |
| Ammonium sulfamate | - | - | - | - | - | - | - | - |
| Sulfamic acid | 2 | - | - | 2 | - | - | - | - |
| Sulfuric acid | - | - | - | - | - | - | - | - |
| Phosphoric acid | - | - | - | - | - | - | - | - |
| Urea | - | - | - | - | - | - | - | - |
| L-Ascorbic acid | - | - | - | - | - | - | - | - |
| Citric acid | - | - | - | - | - | - | - | - |
| | | | | | | | | |
| Amine (equiv.) [b] | | | | | | | | |
| Ammonia (added) | 1.4 | 1.4 | 1.3 | 1.3 | 1.4 | 1.4 | - | - |
| Hexamethylenediamine | - | - | - | - | - | - | 1.2 | - |
| Diethanolamine | - | - | - | - | - | - | - | 1.0 |
| | | | | | | | | |
| Silane (% of binder solids) | 0.5 | 0.5 | 0.5 | 0.5 | 0.5 | 0.5 | 0.5 | 0.5 |
| | | | | | | | | |
| **Binder properties** | | | | | | | | |
| Curing onset (°C) | 167 | 167 | 154 | 161 | 162 | 167 | 175 | 194 |
| Curing endset (°C) | 186 | 190 | 180 | 183 | 184 | 190 | 201 | 217 |
| Reaction loss (%) | 29.7 | 31.8 | 38.1 | 32.5 | 33.0 | 31.8 | 32.4 | 37.8 |
| pH of 15% soln. | 7.9 | 7.5 | 7.8 | 7.5 | 7.5 | 7.5 | 8.5 | 7.2 |
| Mechanical strength, unaged (kN) | 0.17 | 0.15 | 0.15 | 0.13 | 0.17 | 0.15 | 0.15 | 0.19 |
| Mechanical strength, aged (kN) | 0.12 | 0.09 | 0.07 | 0.06 | 0.12 | 0.09 | 0.14 | 0.15 |

[a] Of Carbohydrate + Cyclic oxocarbon or Acid or ascorbic acid. [b] Molar amine equivalents relative to molar mineral or organic acid equivalents.

TABLE 1-6

| | Squaric acid, glucose syrup, mineral acid, urea, ammonia | | | | | | Squaric acid, glucose syrup, optionally hypophosphorous acid, ascorbic acid or citric acid, ammonia | | | | | |
|---|---|---|---|---|---|---|---|---|---|---|---|---|
| **Example** | 15 | 16 | 32 | 33 | 34 | 35 | 16 | 4 | 36 | 37 | 38 | 39 |
| **Binder composition** | | | | | | | | | | | | |
| | | | | | | | | | | | | |
| Cyclic oxocarbon (%-wt.) | | | | | | | | | | | | |
| Squaric acid | 2 | 2 | 2 | 2 | 2 | 1 | 2 | 2 | 2 | 2 | 2 | 2 |
| Croconic acid | - | - | - | - | - | - | - | - | - | - | - | - |
| Rhodizonic acid | - | - | - | - | - | - | - | - | - | - | - | - |
| | | | | | | | | | | | | |
| Acid or Ascorb. acid (%-wt.) | | | | | | | | | | | | |
| L-Ascorbic acid | - | - | - | - | - | - | - | - | - | - | - | - |
| Hypophosphorous acid | - | - | - | - | - | - | - | - | - | - | - | - |
| | | | | | | | | | | | | |
| Carbohydrate (%-wt.) | | | | | | | | | | | | |
| Glucose syrup | 98 | 98 | 98 | 98 | 98 | 99 | 98 | 98 | 98 | 98 | 98 | 98 |
| Xylose | - | - | - | - | - | - | - | - | - | - | - | - |
| Sucrose | - | - | - | - | - | - | - | - | - | - | - | - |
| | | | | | | | | | | | | |
| Additive (%-wt.)[a] | | | | | | | | | | | | |
| Hypophosphorous acid | - | 2 | - | 2 | 2 | 2 | 2 | - | 2 | 2 | - | - |
| Ammonium sulfamate | - | - | - | - | - | - | - | - | - | - | - | - |
| Sulfamic acid | 2 | - | 2 | - | - | - | - | - | - | - | - | - |
| Sulfuric acid | - | - | - | - | - | - | - | - | - | - | - | - |
| Phosphoric acid | - | - | - | - | - | - | - | - | - | - | - | - |
| Urea | - | - | 5 | 5 | 10 | 5 | - | - | - | - | - | - |

(continued)

| | Squaric acid, glucose syrup, mineral acid, urea, ammonia | | | | | | Squaric acid, glucose syrup, optionally hypophosphorous acid, ascorbic acid or citric acid, ammonia | | | | | |
|---|---|---|---|---|---|---|---|---|---|---|---|---|
| **Example** | 15 | 16 | 32 | 33 | 34 | 35 | 16 | 4 | 36 | 37 | 38 | 39 |
| **Binder composition** | | | | | | | | | | | | |
| L-Ascorbic acid | - | - | - | - | - | - | - | - | - | 5 | 5 | 10 |
| Citric acid | - | - | - | - | - | - | - | - | 5 | - | - | - |
| | | | | | | | | | | | | |
| Amine (equiv.) [b] | | | | | | | | | | | | |
| Ammonia (added) | 1.4 | 1.4 | 1.3 | 1.4 | 1.3 | 1.3 | 1.4 | 1.4 | 1.2 | 1.3 | 1.4 | 1.2 |
| Hexamethylenediamine | - | - | - | - | - | - | - | - | - | - | - | - |
| Diethanolamine | - | - | - | - | - | - | - | - | - | - | - | - |
| | | | | | | | | | | | | |
| Silane (% of binder solids) | 0.5 | 0.5 | 0.5 | 0.5 | 0.5 | 0.5 | 0.5 | 0.5 | 0.5 | 0.5 | 0.5 | 0.5 |
| | | | | | | | | | | | | |
| **Binder properties** | | | | | | | | | | | | |
| Curing onset (°C) | 167 | 167 | 165 | 163 | 160 | 175 | 167 | 194 | 152 | 163 | 184 | 176 |
| Curing endset (°C) | 186 | 190 | 187 | 184 | 186 | 195 | 190 | 218 | 175 | 184 | 205 | 196 |
| Reaction loss (%) | 29.7 | 31.8 | 30.2 | 30.7 | 31.6 | 31.5 | 31.8 | 26.0 | 34.1 | 32.5 | 32.3 | 35.0 |
| pH of 15% soln. | 7.9 | 7.5 | 7.6 | 7.4 | 7.2 | 7.9 | 7.5 | 7.8 | 7.6 | 7.2 | 7.8 | 7.0 |
| Mechanical strength, unaged (kN) | 0.17 | 0.15 | 0.16 | 0.18 | 0.15 | 0.19 | 0.15 | 0.17 | 0.17 | 0.18 | 0.15 | 0.16 |
| Mechanical strength, aged (kN) | 0.12 | 0.09 | 0.11 | 0.12 | 0.10 | 0.11 | 0.09 | 0.07 | 0.16 | 0.13 | 0.07 | 0.11 |

[a] Of Carbohydrate + Cyclic oxocarbon or Acid or ascorbic acid. [b] Molar amine equivalents relative to molar mineral or organic acid equivalents.

TABLE 1-7

| | Cyclic oxocarbon, glucose syrup, hypophosphorous acid, ammonia | | | | | |
|---|---|---|---|---|---|---|
| **Example** | 21 | 16 | 40 | 41 | 42 | 43 |
| **Binder composition** | | | | | | |
| | | | | | | |
| Cyclic oxocarbon (%-wt.) | | | | | | |
| Squaric acid | 5 | 2 | - | - | - | - |
| Croconic acid | - | - | 5 | 2 | - | - |
| Rhodizonic acid | - | - | - | - | 5 | 2 |
| | | | | | | |
| Acid or Ascorb. acid (%-wt.) | | | | | | |
| L-Ascorbic acid | - | - | - | - | - | - |
| Hypophosphorous acid | - | - | - | - | - | - |
| | | | | | | |
| Carbohydrate (%-wt.) | | | | | | |
| Glucose syrup | 95 | 98 | 95 | 98 | 95 | 98 |
| Xylose | - | - | - | - | - | - |
| Sucrose | - | - | - | - | - | - |
| | | | | | | |
| Additive (%-wt.)[a] | | | | | | |
| Hypophosphorous acid | 2 | 2 | 2 | 2 | 2 | 2 |
| Ammonium sulfamate | - | - | - | - | - | - |
| Sulfamic acid | - | - | - | - | - | - |
| Sulfuric acid | - | - | - | - | - | - |
| Phosphoric acid | - | - | - | - | - | - |
| Urea | - | - | - | - | - | - |
| L-Ascorbic acid | - | - | - | - | - | - |
| Citric acid | - | - | - | - | - | - |
| | | | | | | |
| Amine (equiv.) [b] | | | | | | |
| Ammonia (added) | 1.2 | 1.4 | 1.2 | 1.5 | 1.3 | 1.4 |
| Hexamethylenediamine | - | - | - | - | - | - |
| Diethanolamine | - | - | - | - | - | - |
| | | | | | | |
| Silane (% of binder solids) | 0.5 | 0.5 | 0.5 | 0.5 | 0.5 | 0.5 |
| | | | | | | |
| **Binder properties** | | | | | | |
| Curing onset (°C) | 149 | 167 | 159 | 178 | 188 | 189 |
| Curing endset (°C) | 166 | 190 | 184 | 201 | 211 | 212 |

(continued)

| Binder properties | | | | | | |
|---|---|---|---|---|---|---|
| Reaction loss (%) | 35.1 | 31.8 | 30.2 | 28.1 | 27.1 | 26.2 |
| pH of 15% soln. | 7.9 | 7.5 | 7.6 | 8.6 | 8.1 | 7.7 |
| Mechanical strength, unaged (kN) | 0.16 | 0.15 | 0.18 | 0.21 | 0.16 | 0.16 |
| Mechanical strength, aged (kN) | 0.11 | 0.09 | 0.12 | 0.13 | 0.04 | 0.04 |
| [a] Of Carbohydrate + Cyclic oxocarbon or Acid or ascorbic acid. [b] Molar amine equivalents relative to molar mineral or organic acid equivalents. | | | | | | |

**Claims**

1. An aqueous binder composition for mineral fibers comprising

   a component (i) in the form of a cyclic oxocarbon;
   a component (ii) in the form of one or more compounds selected from the group of ammonia, amines or any salts thereof;
   a component (iii) in the form of one or more carbohydrates.

2. An aqueous binder composition according to claim 1, wherein the component (i) is a non-heterocyclic cyclic oxocarbon.

3. An aqueous binder composition according to any of the preceding claims, wherein the component (i) is selected from the group of squaric acid, croconic acid, rhodizonic acid, deltic acid, and/or any salt of the compounds, preferably ammonium salts and/or amine salts and/or calcium, sodium, potassium, magnesium or iron salts, and any combinations thereof.

4. An aqueous binder composition according to any of the preceding claims, wherein the component (i) is squaric acid, and/or croconic acid, and/or any salt of squaric acid and/or croconic acid, preferably ammonium salts and/or amine salts and/or calcium, sodium, potassium, magnesium or iron salts, and any combinations thereof.

5. An aqueous binder composition according to any of the preceding claims, wherein the component (i) is in form of one or more of ammonium salts, piperazinium salts, polyamine salts such as hexadimethylenediamine salts, m-xylylenediamine salts, diethylenetriamine salts, triethylenetetramine salts, tetraethylenepentamine salts, and/or monoethanolamine salts, diethanolamine salts and/or triethanolamine salts.

6. An aqueous binder composition according to any one of the preceding claims, wherein the component (ii) is in form of one or more amines, such as piperazine, polyamine such as hexamethylenediamine, m-xylylenediamine, diethylenetriamine, triethylenetetramine, tetraethylenepentamine, monoethanolamine, diethanolamine, triethanolamine and salts thereof.

7. An aqueous binder composition according to any one of the preceding claims, wherein the component (iii) is one or more carbohydrate component selected from the group consisting of hexose, such as dextrose, fructose, pentose such as xylose and/or sucrose, glucose syrup, dextrin or maltodextrin.

8. An aqueous binder composition according to any one of the preceding claims, wherein the proportion of components (i), (ii) and (iii) is within the range of 0.2 to 25 weight-% component (i) based on the mass of components (i) and (iii), 75 to 99.8 weight-% component (iii) based on the mass of components (i) and (iii), and 0.1 to 10 molar equivalents of component (ii) relative to component (i).

9. An aqueous binder composition according to any one of the preceding claims, wherein the aqueous binder composition further comprises a component (iv) in form of a carboxylic acid, or any salt thereof, such as ammonium salts, such as a monomeric mono-, di-, tri-, and polycarboxylic acid, preferably citric acid, such as ammonium salts of citric acid.

**10.** An aqueous binder composition according to any one of the preceding claims, wherein the aqueous binder composition further comprises a component (v) in form of

- compounds of the formula, and any salts thereof:

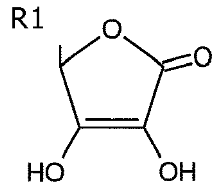

in which R1 corresponds to H, alkyl, monohydroxyalkyl, dihydroxyalkyl, polyhydroxyalkyl, alkylene, alkoxy, amine;

- compounds of the formula, and any salts thereof:

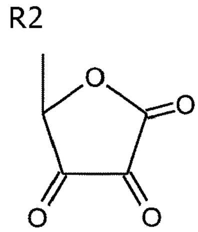

in which R2 corresponds to H, alkyl, monohydroxyalkyl, dihydroxyalkyl, polyhydroxyalkyl, alkylene, alkoxy, amine.

**11.** An aqueous binder composition according to claim 10, wherein component (v) is in form of ascorbic acid and/or any salt thereof, preferably in an amount of 1 to 50 weight-%, preferably 1 to 25 weight-%, more preferably 1 to 15 weight-%, based on the mass of compounds (i) and (iii).

**12.** An aqueous binder composition according to claim 11, wherein component (ii) is preferably present in an amount of 0.1 to 10 molar equivalents of component (ii) relative to the combined molar equivalents of components (i) and (v).

**13.** An aqueous binder composition according to any one of the preceding claims, wherein the aqueous binder composition further comprises a component (vi) selected from sulfuric acid, sulfamic acid, nitric acid, boric acid, hypophosphorous acid, and/or phosphoric acid, and/or salts thereof such as sodium hypophosphite, and/or ammonium salts, such as ammonium salts of sulfuric acid, sulfamic acid, nitric acid, boric acid, hypophosphorous acid, and/or phosphoric acid.

**14.** An aqueous binder composition of any of the preceding claims, wherein the aqueous binder composition further comprises a component (vii) in form of urea, preferably in an amount of 0 to 20 weight-%, preferably 0 to 10 weight-%, more preferably 0 to 5 weight-% urea, based on the mass of components (i), and (iii).

**15.** A method of producing a bonded mineral fibre product which comprises the steps of contacting the mineral fibres with a binder composition according to any one of the claims 1 to 14, and curing the binder composition.

**16.** Mineral fiber product, comprising mineral fibers in contact with a cured binder composition according to any one of claims 1 to 14.

Europäisches Patentamt
European Patent Office
Office européen des brevets

# EUROPEAN SEARCH REPORT

Application Number
EP 15 20 2578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/135152 A1 (FINCH WILLIAM CHRISTOPHER [US] ET AL) 31 May 2012 (2012-05-31) * claim 1 * * paragraph [0063] * ----- | 1-16 | INV. C03C25/24 C03C25/32 D04H1/64 D04H1/4209 C08G16/00 |
| A | US 2015/299391 A1 (PACOREL BENEDICTE [GB]) 22 October 2015 (2015-10-22) * claim 1 * ----- | 1-16 | |
| | | | TECHNICAL FIELDS SEARCHED (IPC) |
| | | | C03C D04H C08G |

The present search report has been drawn up for all claims

1

| Place of search | Date of completion of the search | Examiner |
|---|---|---|
| Munich | 30 May 2016 | Barrère, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 15 20 2578

This annex lists the patent family members relating to the patent documents cited in the above-mentioned European search report. The members are as contained in the European Patent Office EDP file on
The European Patent Office is in no way liable for these particulars which are merely given for the purpose of information.

30-05-2016

| Patent document cited in search report | Publication date | Patent family member(s) | Publication date |
|---|---|---|---|
| US 2012135152 A1 | 31-05-2012 | AU 2011247871 A1 | 14-06-2012 |
| | | BR PI1107078 A2 | 22-03-2016 |
| | | CA 2756492 A1 | 30-05-2012 |
| | | CN 102533208 A | 04-07-2012 |
| | | EP 2457943 A1 | 30-05-2012 |
| | | JP 2012117045 A | 21-06-2012 |
| | | US 2012135152 A1 | 31-05-2012 |
| US 2015299391 A1 | 22-10-2015 | CA 2892897 A1 | 12-06-2014 |
| | | EP 2928935 A2 | 14-10-2015 |
| | | US 2015299391 A1 | 22-10-2015 |
| | | WO 2014086775 A2 | 12-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A


### Non-patent literature cited in the description


- Oxocarbons. Academic Press, 1980